# EUROPEAN PATENT APPLICATION

(11) **EP 4 071 900 A1**
(43) Date of publication of application: **12.10.2022**
(21) Application number: 20895402.4
(22) Date of filing: 13.11.2020
(51) Int. Cl.: H01M 50/20, H01M 50/30, H01M 50/50

(54) **BATTERY PACK**

(30) Priority: 03.12.2019 JP 2019218561
(71) Applicant: SANYO Electric Co., Ltd., Daito-shi Osaka 574-8534 (JP)
(72) Inventor: MATSUSHITA, Fumiya, Chuo-ku, Osaka-shi, Osaka 540-6207 (JP); MATSUBARA, Shota, Chuo-ku, Osaka-shi, Osaka 540-6207 (JP)
(74) Representative: Novagraaf International SA
(86) International application number: PCT/JP2020/042358
(87) International publication number: WO 2021/111842

(57) **Abstract**

Thermal runaway of a battery cell is prevented from being induced in another battery cell and catching fire of the battery cell is prevented, ensuring safety. A battery pack includes a battery assembly including battery cells (1) parallel to one another and an outer case (4) housing the battery assembly. Each battery cell includes a discharge valve provided on an end surface thereof, and an end-surface electrode (1a, 1b) provided at an end portion thereof and arranged on the same plane. A welding surface (3B) of the lead plate (3) is connected to the end-surface electrode (1a, 1b) arranged on the same plane. The battery pack includes a backflow-restricting layer (5) disposed on a non-welding surface (3A) of the lead plate (3) in the outer case (4). The lead plate (3) has a gas permeation gap (33) therein allowing an exhaust gas discharged from the discharge valve to pass in a discharge direction of the backflow-restricting layer (5) from the battery cell (1). The backflow-restricting layer (5) includes a resistance part (7) configured to allow the exhaust gas passing through gas permeation gap (33) to pass in the discharge direction, and to suppress or prevent the exhaust gas from passing in a direction opposite to the discharge direction.

## Description

### TECHNICAL FIELD

The present invention relates to a battery pack that prevents thermal runaway of a battery cell from being induced in another battery cell.

### BACKGROUND ART

Thermal runaway may occur in a rechargeable battery cell due to various causes such as internal short circuit and overcharge. For example, when thermal runaway of a lithium ion battery occurs, a discharge valve opens and ejects an exhaust gas vigorously for several seconds. The exhaust gas has an extremely high temperature exceeding 700°C, and is ejected into an outer case to induce thermal runaway of another battery cell. That is, the battery cell in which thermal runaway has occurred causes another battery cell to catch fire. Thus, thermal energy is significantly increased to cause expansion of a thermal failure. Battery packs having various structures have been developed in order to prevent the induction of the thermal runaway (see PTL 1).

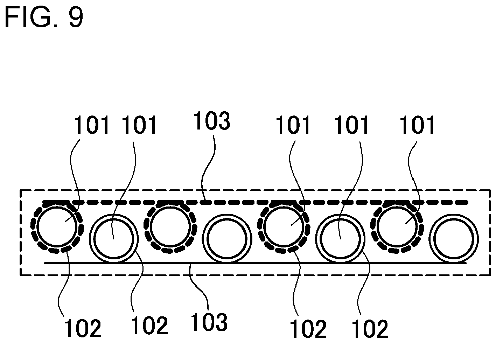

As shown in a schematic cross-sectional view of FIG. 9, in the battery pack having this structure, tubular body 102 into which cylindrical battery 101 is inserted is coupled to thermal conduction plates 103. Thermal energy of cylindrical battery 101 that has reached a high temperature due to thermal runaway is transferred to thermal conduction plates 103 to be absorbed. Thermal conduction plates 103 are arranged apart from each other in a two-layer structure. Adjacent tubular bodies 102 into which cylindrical battery 101 is inserted are coupled to separate thermal conduction plates 103, and thus, the thermal energy of adjacent cylindrical batteries 101 is absorbed by separate thermal conduction plates 103.

The battery pack having this structure may prevent thermal runaway from being induced in the adjacent battery cell, but cannot prevent thermal runaway of the battery cell positioned at a position away from the battery cell in which thermal runaway has occurred. This is because this configuration may prevents the thermal energy of the battery cell in which thermal runaway has occurred from being thermally conducted to the adjacent battery cell, but cannot prevent the induction of the thermal runaway by the exhaust gas ejected from the battery cell in which thermal expansion has occurred. In the battery cell in which thermal runaway has occurred, the discharge valve opens, and instantaneously ejects the exhaust gas at the extremely high temperature vigorously. The high-temperature exhaust gas may flow inside along an inner surface of the outer case, and may overheat the battery cell at a distant position to cause thermal runaway. The exhaust gas melts an insulator insulating an end-surface electrode of the battery cell, and thus, the thermal runaway is induced in the battery cell at the distant position. In the battery cell, one end-surface electrode is insulated and is fixed to a battery case and the end-surface electrode is insulated from the battery case serving as the other electrode. When the insulator is melted, the end-surface electrode insulated from the battery case is short-circuited to the battery case, allowing an excessive short-circuit current to flow. The excessive short-circuit current causes thermal runaway by heating the battery cell with Joule heat.

### CITATION LIST

### Patent Literature

PTL 1: Japanese Patent Laid-Open Publication No. 2018-045919

### SUMMARY OF THE INVENTION

### Technical Problem to be Solved

The present invention has been developed in order to solve the above defects. An object of the present invention is to provide a battery pack that ensures excellent safety by preventing thermal runaway of a battery cell from being induced in another battery cell housed in an outer case and preventing catching fire of the battery cell.

### Solution to Problem

A battery pack according to an aspect of the present invention includes a battery assembly including battery cells arranged parallel to one another, and an outer case housing the battery assembly therein. Each plurality battery cell includes a discharge valve and an end-surface electrode. The discharge valve is provided on an end surface of each battery cell. The end-surface electrode is provided at an end portion of each battery cell and arranged on a same plane. A lead plate having a welding surface is connected to the end-surface electrode arranged on the same plane. The battery pack further includes a backflow-restricting layer disposed in the outer case. The backflow-restricting layer is disposed on a non-welding surface of the lead plate. The lead plate has a gas permeation gap therein allowing an exhaust gas discharged from the discharge valve to pass through the gas permeation gap in a discharge direction of the backflow-restricting layer from the battery cell. The backflow-restricting layer includes a resistance part configured to allow the exhaust gas passing through the gas permeation gap to pass in the discharge direction, and to suppress or prevent the exhaust gas from passing in a direction opposite to the discharge direction.

### Advantageous Effect of Invention

The battery pack of the present invention prevents thermal runaway of the battery cell from being induced by another battery cell housed in the outer case and prevents the catching fire of the battery cell, thus ensuring safety.

### BRIEF DESCRIPTION OF THE DRAWINGS

FIG. 1 is a schematic vertical longitudinal cross-sectional view of a battery pack according to an exemplary embodiment of the present invention.
FIG. 2 is a horizontal cross-sectional view of the battery pack shown in FIG. 1.
FIG. 3 is a perspective view of a battery assembly of the battery pack shown in FIG. 1.
FIG. 4 is a side view of the battery assembly shown in FIG. 3.
FIG. 5 is an exploded perspective view of the battery assembly shown in FIG. 3.
FIG. 6 is an exploded perspective view showing a positional relationship between a battery holder and a lead plate of the battery assembly shown in FIG. 3.
FIG. 7 is an enlarged cross-sectional view of the battery pack shown in FIG. 2.
FIG. 8 is an enlarged cross-sectional view showing a state where an exhaust gas passes through a backflow-restricting layer in a direction opposite to a discharge direction.
FIG. 9 is a schematic cross-sectional view of a conventional battery pack.

### DESCRIPTION OF EMBODIMENT

An exemplary embodiment of the present invention may be specified by the following configuration.

A battery pack according to a first exemplary embodiment of the present invention includes a battery assembly including battery cells arranged parallel to one another, and an outer case housing the battery assembly therein. Each battery cell includes a discharge valve and an end-surface electrode. The discharge valve is provided on an end surface of the battery cell. The end-surface electrode is provided at an end portion of the battery cell and arranged on a same plane. A lead plate having a welding surface is connected to the end-surface electrode arranged on the same plane. The battery pack further includes a backflow-restricting layer disposed in the outer case. The backflow-restricting layer is disposed on a non-welding surface of the lead plate. The lead plate has a gas permeation gap therein allowing an exhaust gas discharged from the discharge valve to pass through the gas permeation gap in a discharge direction of the backflow-restricting layer from the battery cell. The backflow-restricting layer includes a resistance part configured to allow the exhaust gas passing through the gas permeation gap to pass in the discharge direction, and to suppress or prevent the exhaust gas from passing in a direction opposite to the discharge direction.

The above battery pack prevents a catching fire of another battery cell housed in the outer case due to the battery cell in which thermal runaway has occurred, thus having an advantage ensuring excellent safety. Particularly, in the above battery pack, the backflow-restricting layer is disposed on the surface of the lead plate having the gas permeation gap. In the backflow-restricting layer, the high-temperature and high-pressure exhaust gas ejected from the battery cell in which thermal runaway has occurred passes through the gas permeation gap of the lead plate in the discharge direction is discharged to the inside of the outer case, and is diffused on the inner surface of the outer case to reduce energy. The resistance part prevents the exhaust gas diffused on the inner surface of the outer case and attenuated in energy from flowing in the opposite direction toward another battery cell, and further reduces the energy. As a result, another battery cell is prevented from being overheated to a high temperature by the high-temperature and high-pressure exhaust gas ejected from the battery cell in which the thermal runaway has occurred. Thus, the high-temperature and high-pressure exhaust gas does not melt and short-circuit an insulator that insulates the positive and negative electrode terminals. The battery pack effectively prevents an adverse effect that the battery cell itself is short-circuited, an excessive short-circuit current flows, and thermal runaway occurs. Accordingly, the above battery pack has an advantage that, even when thermal runaway occurs in a particular battery cell, thermal runaway is prevented from being induced in another battery cell, thus securing high safety.

In a battery pack according to a second exemplary embodiment of the present invention, the battery assembly further includes a battery holder allowing the plurality of battery cells to be arranged in fixed positions. The battery holder includes a surface plate allowing the lead plate to be disposed at a fixed position. The surface plate has an electrode window therein that exposes, through the electrode window, the end-surface electrode of the each of the plurality of battery cells disposed in the fixed positions. The lead plate is connected to the end-surface electrode of the each of the plurality of battery cells in the electrode window.

In the above battery pack, the lead plate may be disposed at the fixed position of the surface plate of the battery holder and the backflow-restricting layer may be placed on the lead plate. Therefore, the exhaust gas ejected from the battery cell in which thermal runaway has occurred is prevented from passing between the lead plate and the battery cell and flowing toward the adjacent battery cell, thus having an advantage preventing the catching fire of the adjacent battery cell.

In a battery pack according to a third exemplary embodiment of the present invention, the lead plate disposed at the fixed position of the surface plate has plural gas permeation gaps therein.

In the above battery pack, the gas permeation gaps provided in the lead plate causes the exhaust gas passing through the specific gas permeation gap due to thermal runaway to be dispersed in the gas permeation gaps. Accordingly, the energy of the high-temperature and high-pressure exhaust gas is more effectively reduced, thus providing an advantage suppressing the catching fire of another battery cell more reliably.

In a battery pack according to a fourth exemplary embodiment of the present invention, the backflow-restricting layer has a through-hole through which the exhaust gas passes, and a resistance part closing a position facing the gas permeation gap around the through-hole.

In the above battery pack, the through-hole is formed in the backflow-restricting layer, and the resistance part is provided to close the position facing the gas permeation gap around the through-hole. This configuration prevents the exhaust gas flowing in the opposite direction from directly passing through the gas permeation gap. The exhaust gas flowing in the opposite direction through the through-hole passes through the gas permeation gap while the exhaust gas collides with the surface of the lead plate to reduce energy without directly flowing into the gas permeation gap. This provides an advantage preventing the catching fire of the battery cell effectively. The exhaust gas discharged from the battery cell in which thermal runaway has occurred may pass through the through-hole of the backflow-restricting layer and smoothly flow into between the backflow-restricting layer and the outer case. This configuration provides an advantage suppressing the catching fire of the adjacent battery cell effectively by preventing the pressure of the exhaust gas from increasing on the inner surface of the backflow-restricting layer and leaking from the gap toward the adjacent battery cell.

In a battery pack according to a fifth exemplary embodiment of the present invention, the gas permeation gap of the lead plate is a slit opening having an annular shape. The through-hole of the backflow-restricting layer opens and faces an inside of the slit to constitute the resistance part.

The above battery pack has an advantage that the exhaust gas that has passed through the through-hole in the opposite direction can be dispersed and flown into the annular slit opening and the exhaust gas can be prevented from directly flowing into the inner surface of the lead plate to induce thermal runaway of the battery cell.

In a battery pack according to a sixth exemplary embodiment of the present invention, the backflow-restricting layer has a cutout therein extended radially from the through-hole.

The above battery pack has an advantage that the high-temperature and high-pressure exhaust gas in which thermal runaway has occurred can more smoothly pass in the discharge direction and smoothly flow into the inside of the outer case. His configuration provides an advantage that the catching fire of the adjacent battery cell can be effectively suppressed by preventing the pressure of the exhaust gas from increasing on the inner surface of the backflow-restricting layer and leaking from the gap toward the adjacent battery cell. The reason why the exhaust gas smoothly flows into the inner surface of the outer case is that the cutout expands the through-hole of the backflow-restricting layer to allow the exhaust gas to smoothly pass through the through-hole.

In a battery pack according to a seventh exemplary embodiment of the present invention, the backflow-restricting layer has a cutout therein extended radially, the cutout allowing the exhaust gas to pass through the cutout. The cutout has a resistance part closing a position facing the gas permeation gap.

In the above battery pack, the backflow-restricting layer has the radially extended cutout, and the cutout is deformed by the high-temperature exhaust gas ejected from the battery cell, and the exhaust gas can be discharged. This cutout suppresses the passage of the exhaust gas flowing in the opposite direction.

In a battery pack according to an eighth exemplary embodiment of the present invention, the backflow-restricting layer is made of rubber material.

In the above battery pack, the backflow-restricting layer made of the rubber material allows the exhaust gas ejected from the exhaust gas in which thermal runaway has occurred to burn out a part of the backflow-restricting layer. Thus, the high-temperature and high-pressure exhaust gas may more smoothly flow into the inside of the outer case.

In a battery pack according to a ninth exemplary embodiment of the present invention, the backflow-restricting layer is made of foamed material.

The above battery pack including the backflow-restricting layer made of the foamed material provides an advantage that the exhaust gas ejected from the exhaust gas due to thermal runaway quickly burns off a part of the backflow-restricting layer, thereby allowing the high-temperature and high-pressure exhaust gas to more smoothly flow into the inside of the outer case. The reason why the backflow-restricting layer made of the foamed material can quickly burn off the region where the exhaust gas is ejected is that a heat capacity of the backflow-restricting layer with respect to a volume is small and the backflow-restricting layer can burn off with less thermal energy.

In a battery pack according to a tenth exemplary embodiment of the present invention, the battery cell has a protrusion electrode on an end surface thereof. The discharge valve has an exhaust port opening at an outer periphery of the protrusion electrode.

In a battery pack of an eleventh exemplary embodiment of the present invention, the battery cell is a cylindrical battery.

In a battery pack according to a twelfth exemplary embodiment of the present invention, the lead plate includes a plate part having a flat shape and constituting the non-welding surface, and an electrode connecting tongue connected to the end-surface electrode of the battery cell. The electrode connecting tongue constitutes the welding surface. The lead plate having a slit opening provided therein along an outer periphery of the electrode connecting tongue, the slit opening constituting the gas permeation gap.

In a battery pack according to a thirteenth exemplary embodiment of the present invention, the backflow-restricting layer is bonded to a surface of the lead plate.

The present invention will be described below in detail with reference to the drawings. In the following description, terms (for example, "top", "bottom", and other terms including those terms) indicating specific directions or positions are used as necessary; however, the use of those terms is for facilitating the understanding of the invention with reference to the drawings, and the technical scope of the present invention is not limited by the meanings of the terms. Parts denoted by the same reference numerals appearing in plural figures indicate the same or equivalent parts or members.

Exemplary embodiments described below show specific examples of the technical idea of the present invention, and the present invention is not limited to the following exemplary embodiment. In addition, unless otherwise specified, dimensions, materials, shapes, relative arrangements, and the like of the configuration components described below are not intended to limit the scope of the present invention only to them, but are intended to be illustrative. The contents described in one exemplary embodiment or example are also applicable to other exemplary embodiments and examples. The sizes, positional relationships, and the like of members shown in the drawings may be exaggerated in order to make the description clear.

A battery pack of the present invention is suitable for being attached to an electric device that is mainly an electric vehicle and supplying electric power to a driving motor. The battery pack of the present invention is used, for example, as a power source for an assisted bicycle, an electric motorcycle, an electric wheelchair, an electric tricycle, an electric cart, and the like. However, the present invention does not limit an application of the battery pack, and can be used as a power source for other various electric devices such as an electric tool.

### Exemplary Embodiment 1

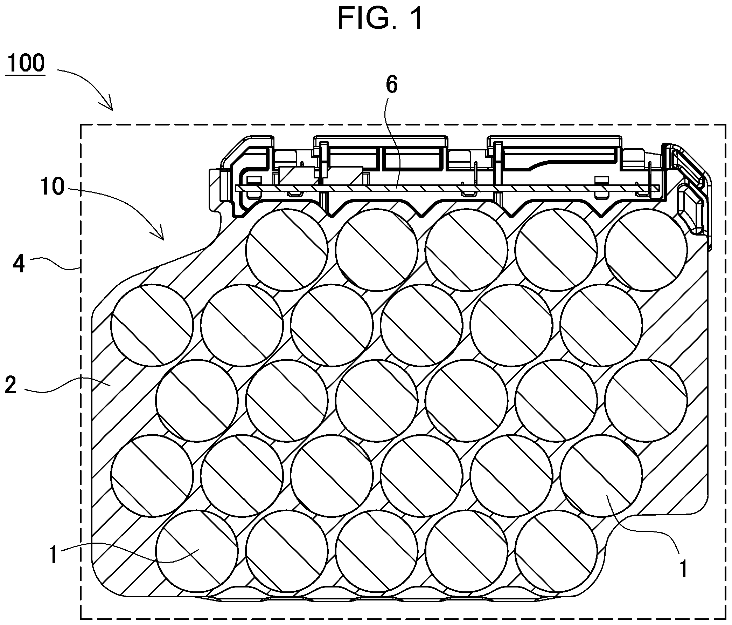

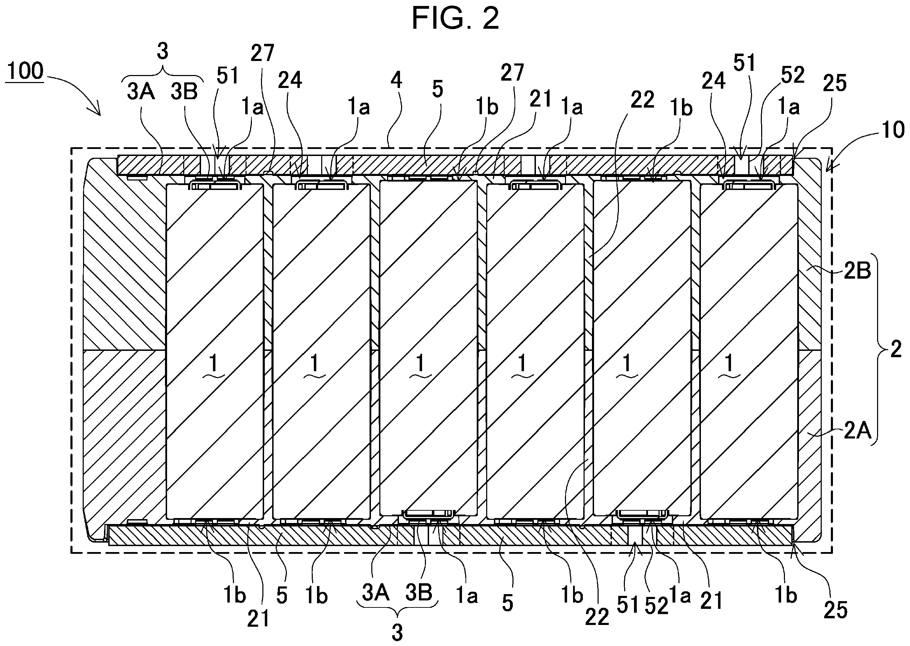

In battery pack 100 shown in FIGS. 1 and 2, battery assembly 10 that houses battery cells 1 in battery holder 2 is housed in outer case 4. In battery assembly 10, battery cells 1 each including a discharge valve on an end surface thereof are arranged parallel to one another. End-surface electrodes 1a and 1b provided at end portions of battery cells 1 are arranged on the same planes. Welding surfaces 3B of lead plates 3 are connected to end-surface electrodes 1a and 1b arranged on the same planes. In battery pack 100, backflow-restricting layer 5 is disposed on non-welding surfaces 3A of lead plates 3 inside outer case 4. Backflow-restricting layer 5 controls a flow of a high-temperature and high-pressure exhaust gas ejected from battery cell 1 in which thermal runaway has occurred, and thermal runaway is prevented from being induced in another battery cell 1.

### Battery Assembly 10

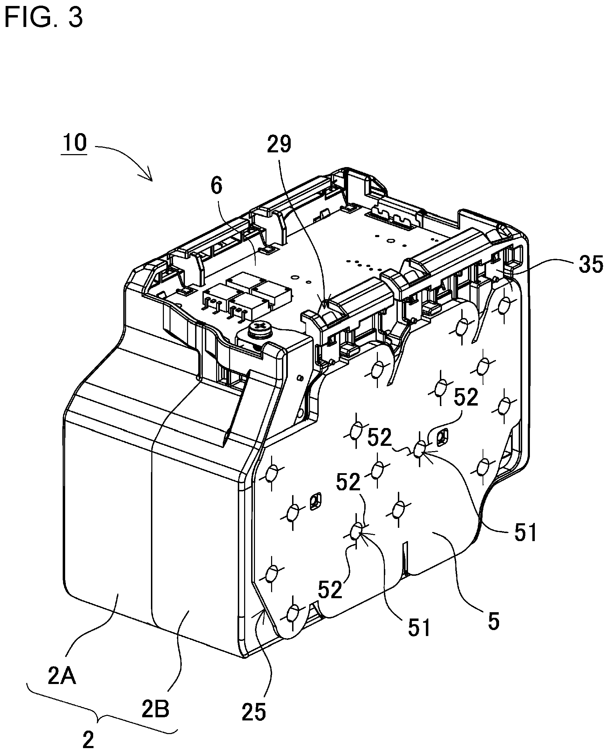

Battery assembly 10 shown in FIGS. 3 to 6 includes battery cells 1 each including different, positive and negative end-surface electrodes 1a and 1b provided at both ends thereof, battery holder 2, and lead plates 3. Battery holder 2 houses battery cells 1 parallel to one another while end-surface electrodes 1a and 1b of battery cells 1 are arranged on the same planes in multiple stages and multiple rows. Lead plates 3 are connected to end-surface electrodes 1a and 1b of battery cells 1 housed in battery holder 2 and connecting adjacent battery cells 1 in series and in parallel.

### Battery Cell 1

Battery cell 1 includes positive and negative electrodes are provided at both ends thereof. One end-surface electrode 1a is a protrusion electrode, and another end-surface electrode 1b is a flat electrode. Battery cell 1 shown in the drawing is a cylindrical battery. Although not shown, in the cylindrical battery, an electrode body is housed in a cylindrical exterior can, and is filled with an electrolytic solution. A sealing plate seals an opening of the exterior can via an insulator, such as a gasket. In the cylindrical battery, the positive and negative electrodes are provided by providing a protrusion electrode on the sealing plate insulated via the insulator to form one end-surface electrode 1a, and a bottom surface of the exterior can to form another end-surface electrode 1b. Battery cell 1 includes a discharge valve (not shown) configured to open when an internal pressure exceeds a predetermined pressure inside the protrusion electrode. The discharge valve has an exhaust port provided at an outer periphery of the protrusion electrode.

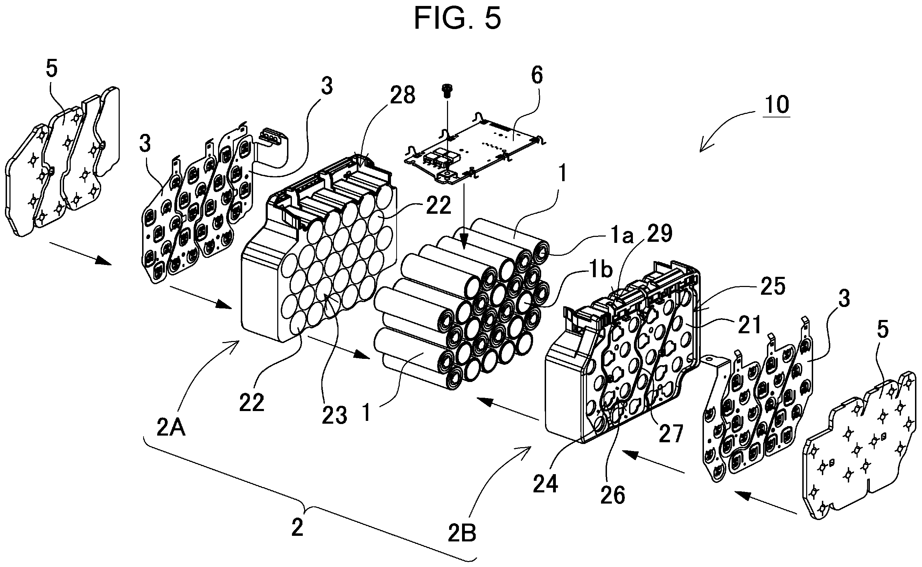

Battery cell 1 is a rechargeable lithium ion secondary battery. Battery cell 1 is not limited to the lithium ion battery, and may be a rechargeable battery, such as a nickel hydride battery or a nickel cadmium battery. The cylindrical battery is used in battery pack 100 of the present exemplary embodiment. The present invention is not limited to the cylindrical battery and may include a rectangular battery or a flat battery. Battery assembly 10 houses battery cells 1 parallel to one another in battery holder 2 in multiple stages and multiple rows. The number of battery cells 1 included in battery assembly 10 is an optimum number in consideration of an application of battery pack 100, a charge and discharge capacity, a maximum load current, a capacity of each battery cell 1, and the like, and may be, for example, 10 to 100. In battery assembly 10, the number of battery cells 1 to be connected in parallel to one another may be increased to increase the maximum current to be supplied to a load. The total number of the battery cells may be increased to increase a total charge and discharge capacity. In battery pack 100 shown in FIGS. 1 and 2, battery cells 1 are arranged parallel to one another as shown in FIG. 5, two or more cells may be connected along a line, and battery cells in this state may be arranged parallel to one another.

### Battery Holder 2

Battery holder 2 is made of thermoplastic resin, such as plastic, that is insulator. As shown in FIG. 2, in battery holder 2, surface plates 21 are integrally molded and coupled to both ends of holding part 22 through which battery cells 1 are inserted and held. In battery holder 2, holding part 22 is provided between a pair of surface plates 21 facing each other to form battery housing 23. Holding part 22 shown in FIGS. 1 and 5 has a tubular shape along an outer peripheral surface of cylindrical battery cell 1 or a tubular shape partially provided with an opening portion. The pair of surface plates 21 are positioned at both ends of holding part 22 and arranged parallel to each other. Surface plate 21 has a plate shape perpendicular to holding part 22. Surface plate 21 has a shape conforming to an inner shape of outer case 4.

In battery holder 2 shown in FIGS. 2 and 5, holding part 22 is divided into two part at a middle position in an axial direction, and end portions of divided holding parts 22 are integrally molded with surface plate 21 to form a pair of holder units 2A and 2B. Battery holder 2 includes battery housing 23 that holds battery cells 1 at fixed positions by coupling the pair of holder units 2A and 2B while battery cells 1 are housed in holding parts 22 of holder units 2A and 2B. The pair of holder units 2A and 2B are coupled by a locking structure. However, the divided holder units may be coupled with a setscrew into the boss, or may be coupled by adhesive.

As shown in FIGS. 1 and 5, battery holder 2 holds the plurality of battery cells 1 inserted into holding parts 22 at fixed positions by arranging battery cells in multiple stages and multiple rows. In battery holder 2, lead plates 3 are disposed on surface plates 21 positioned on both sides. Battery cells 1 held at fixed positions of battery holder 2 are connected by lead plates 3. Surface plate 21 has electrode windows 24 therein through which end-surface electrodes 1a and 1b of battery cells 1 are exposed to open outside holding parts 22. Lead plates 3 are welded to end-surface electrodes 1a and 1b exposed through electrode windows 24.

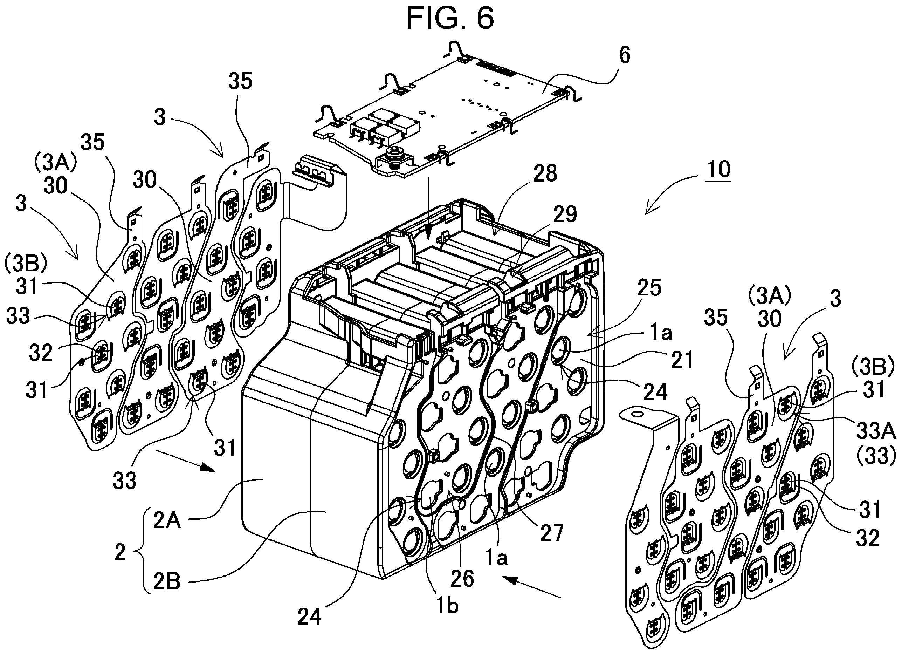

Surface plate 21 in FIGS. 2 and 6 has recess 25 formed in an outer surface thereof. Lead plates 3 are fitted in recess 25 to be arranged at fixed positions. Recess 25 in the drawing is a region where lead plates 3 are arranged, and is formed over substantially the entire surface except for an upper end portion of an outer surface of surface plate 21. In surface plate 21 in the drawing, positioning recesses 26 into which lead plates 3 are fitted are provided in a bottom surface of recess 25. In positioning recesses 26, lead plates 3 are arranged on the same plane on the bottom surface. Positioning recess 26 has a recess shape lower by one step. Insulating rib 27 is provided at a boundary between adjacent positioning recesses 26. Surface plate 21 is disposed at a fixed position by fitting lead plate 3 into positioning recess 26.

In battery holder 2 shown in FIG. 6, the pair of surface plates 21 protrude upward from both ends of holding parts 22. Housing space 28 of a board for housing circuit board 6 is provided between the pair of surface plates 21. Connection window 29 for connecting connection part 35 of lead plate 3 to circuit board 6 opens in surface plate 21. Connection window 29 opens at a position of connection part 35 of lead plate 3 disposed in positioning recess 26. Connection part 35 is exposed to housing space 28. Connection part 35 of lead plate 3 is disposed in connection window 29 and is connected to circuit board 6 disposed in housing space 28.

In battery holder 2 described above, the half of holding part 22 and surface plate 21 are integrally molded to form each of holder units 2A and 2B, battery pack 100 does not specify the battery holder to have the above structure. The battery holder may be any other structures capable of holding plural of battery cells at predetermined positions.

### Lead Plate 3

Lead plates 3 are arranged at fixed positions in a fitting structure on a bottom surface of recess 25 provided in surface plate 21, and are connected to end-surface electrodes 1a and 1b of battery cells 1. Lead plate 3 includes electrode connecting tongues 31. Electrode connecting tongues 31 are welded and connected to end-surface electrodes 1a and 1b of battery cells 1 exposed from electrode windows 24 of surface plate 21 by a method, such as spot welding or laser welding. Lead plate 3 is made of material having good electric conductivity and thermal conductivity, and preferably, made of a metal plate, such as an iron plate with surfaces plated with nickel or the like, a nickel plate, a copper plate, or an aluminum plate. In battery pack 100 in the drawing, lead plates 3 are arranged in recess 25 in both side surfaces of battery holder 2, and are connected to end-surface electrodes 1a and 1b of battery cells 1.

Electrode connecting tongues 31 are arranged at positions facing end-surface electrodes 1a and 1b of battery cells 1 while lead plate 3 is disposed on surface plate 21 of battery holder 2. Electrode connecting tongues 31 are provided in one lead plate 3 in order to be connected to battery cells 1. As shown in the exploded perspective view of FIG. 6, electrode connecting tongues 31 that protrude from planar plate-shaped part 30 toward end-surface electrodes 1a and 1b of battery cells 1 are provided in lead plate 3. Electrode connecting tongues 31 protruding from flat plate part 30 are guided by electrode windows 24 of surface plate 21 of battery holder 2, and are connected to end-surface electrodes 1a and 1b of battery cells 1. In lead plate 3, plate part 30 and electrode connecting tongues 31 are connected by coupling parts 32. Gas permeation gaps 33 are provided between plate part 30 and electrode connecting tongues 31.

Coupling part 32 may be locally narrow to function as a fuse that is fused by a short-circuit current of battery cell 1. Battery cell 1 is protected from an overcurrent by fusing coupling part 32 of lead plate 3 as the fuse by a short-circuit current flowing through battery cell 1. In lead plate 3, all coupling parts 32 may not necessarily function as fuses. Battery cell 1 may be protected from short-circuit current with only coupling part 32 that couples, to plate part 30, electrode connecting tongue 31 connected to one of positive and negative end-surface electrodes 1a and 1b functioning as a fuse.

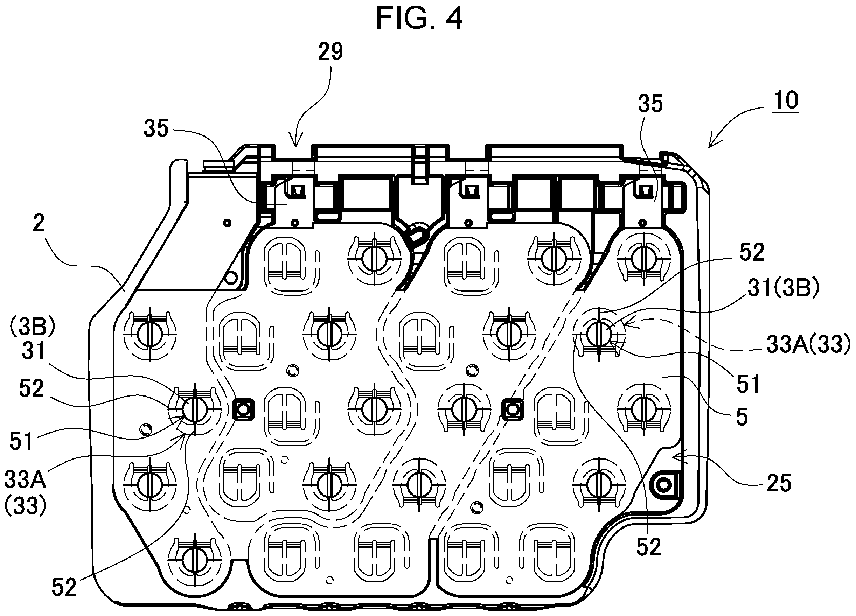

Gas permeation gap 33 of lead plate 3 allows exhaust gas ejected from the discharge valve of battery cell 1 to pass through. Gas permeation gap 33 shown in FIGS. 4 and 6 is an annular slit opening 33A provided along an outer peripheral edge of electrode connecting tongue 31. Gas permeation gap 33 allows the exhaust gas ejected from the discharge valve of battery cell 1 in which thermal runaway has occurred to smoothly pass through lead plate 3 and to flow into the inside of outer case 4.

In battery pack 100 shown in FIG. 2, backflow-restricting layer 5 is provided between lead plate 3 and an inner surface of outer case 4 to control the flow of the exhaust gas. In a conventional battery pack which does not include backflow-restricting layer 5, the high-temperature exhaust gas that has passed through the lead plate causes thermal runaway of a battery cell in a portion away from the battery cell in which thermal runaway has occurred. This is because the high-temperature exhaust gas passes through the gas permeation gaps and flows into between the lead plate and the outer case, and flows along the inner surface of the outer case and overheats the battery cell positioned at a position away from the battery cell in which thermal runaway has occurred. This is because the battery cell heated by the exhaust gas dissolves an insulator that insulates the positive and negative electrodes of the battery cell to cause a short circuit. This is because in the battery cell in which the insulator is melted, the positive and negative electrodes are short-circuited, an excessive short-circuit current flows by a voltage of the battery cell, and heat is generated by Joule heat of the short-circuit current.

Battery pack 100 of FIG. 2 includes backflow-restricting layer 5 disposed on non-welding surface 3A of lead plate 3 inside outer case 4. The backflow-restricting layer 5 prevents the exhaust gas which passes through gas permeation gaps 33 of lead plate 3 and is ejected to the inner surface of outer case 4 from causing thermal runaway of another battery cell 1. Lead plate 3 allows the exhaust gas discharged from the discharge valve to pass through gas permeation gaps 33 and to pass in a discharge direction of backflow restricting layer 5 from battery cell 1. Backflow-restricting layer 5 includes resistance part 7 that allows the exhaust gas passing through gas permeation gap 33 to pass in the discharge direction but suppresses or prevents the exhaust gas passing in a direction opposite to the discharge direction. This configuration prevents catching fire of battery cell 1 at a distant position.

backflow-restricting layer 5 prevents catching fire of battery cell 1 at the distant position while thermal runaway has occurred in battery cell 1 for the following reason. The high-temperature exhaust gas ejected from battery cell 1 in which thermal runaway has occurred passes through backflow-restricting layer 5 in the discharge direction from gas permeation gap 33 of lead plate 3. Subsequently, the exhaust gas discharged to the inside of outer case 4 is diffused on the inner surface of outer case 4 to reduce energy. The exhaust gas is diffused on the inner surface of outer case 4 to reduce energy, and hen, flows in the opposite direction toward another battery cell 1, but is suppressed by resistance part 7 to further reduce energy. This configuration prevents the overheating of distant battery cell 1 by the exhaust gas. In battery cell 1 with a small temperature rise due to the exhaust gas, since the insulator that insulates the positive and negative electrodes is not melted, the positive and negative electrodes are not short-circuited, and thermal runaway due to the short-circuit current can be prevented.

In battery pack 100 of FIG. 2, lead plate 3 is disposed at a fixed position on surface plate 21 of battery holder 2 in which battery cells 1 are arranged at fixed positions in a fitting structure. Electrode windows 24 for exposing end-surface electrodes 1a and 1b of battery cells 1 open in surface plate 21. In battery pack 100, electrode connecting tongues 31 of lead plate 3 are connected to end-surface electrodes 1a and 1b at electrode windows 24. The exhaust gas ejected from battery cell 1 in which thermal runaway has occurred is prevented from passing between lead plate 3 and battery cell 1 and flowing toward adjacent battery cell 1, thereby preventing the catching fire of adjacent battery cell 1. In this structure, lead plate 3 may securely close contact surface plate 21 of battery holder 2 to prevent gas leakage between lead plate 3 and surface plate 21.

In battery pack 100 shown in FIG. 2, battery assembly 10 includes a large number of battery cells 1. Electrode connecting tongues 31 connected to end-surface electrodes 1a and 1b of battery cells 1 are provided in lead plates 3 placed on surface plate 21. Gas permeation gaps 33 are provided around electrode connecting tongues 31. As shown in FIG. 6, a large number of gas permeation gaps 33 are arranged and provided in lead plate 3 around electrode connecting tongues 31. Lead plate 3 having a large number of gas permeation gaps 33 reduces the energy of the exhaust gas ejected from specific battery cell 1 and passing through gas permeation gaps 33 in the opposite direction, effectively preventing the induction of the thermal runaway can.

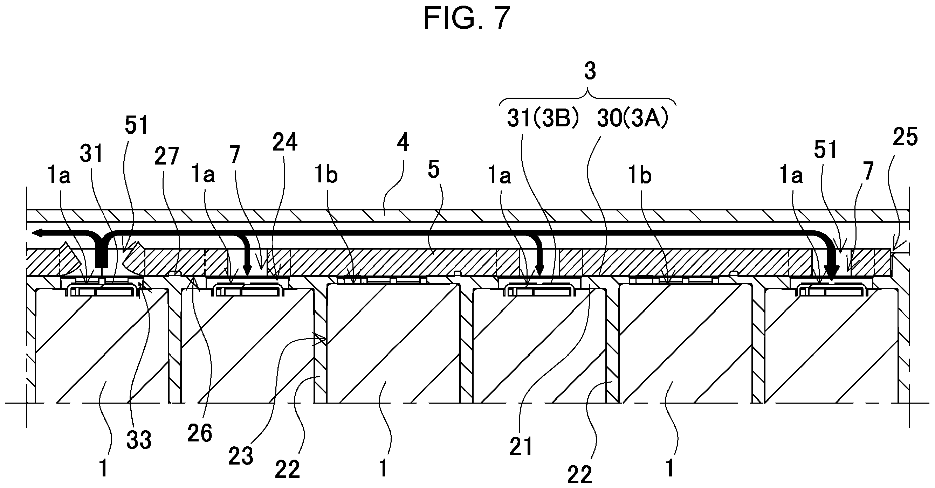

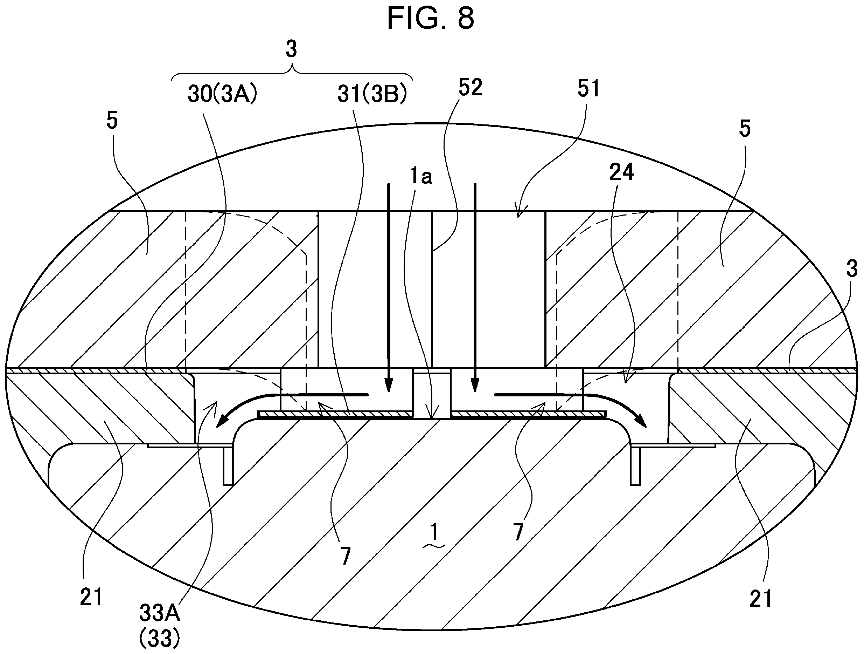

Plural through-holes 51 through which the exhaust gas smoothly passes in the discharge direction are provided in backflow-restricting layer 5 shown in FIGS. 2 to 5. Through-hole 51 opens at a position facing the discharge valve side so that the exhaust gas ejected from battery cell 1 in which thermal runaway has occurred may pass through the through-hole. As shown in FIGS. 4 and 7, through-hole 51 opens at a position facing a center of slit opening 33A having an annular shape. Resistance part 7 closes the facing position of gas permeation gap 33 such that the exhaust gas flowing in the opposite direction does not directly pass through gas permeation gap 33. That is, as shown in an enlarged cross-sectional view of FIG. 8, the exhaust gas flowing through through-hole 51 in the opposite direction collides with lead plate 3 and end-surface electrode 1a, changes its flow direction to be dispersed to the periphery, and passes through gas permeation gap 33.

In backflow-restricting layer 5 shown in FIGS. 4 and 8, through-hole 51 opens to face an inside of the annular shape of slit opening 33A so that resistance part 7 may prevent the exhaust gas flowing in the opposite direction through through-hole 51 from directly flowing into gas permeation gap 33. Through-hole 51 and slit opening 33A in FIG. 4 has a circular shape, and an inner diameter of through-hole 51 is smaller than a diameter of an inner edge of slit opening 33A. The inner diameter of through-hole 51 is preferably smaller than the diameter of the inner edge of slit opening 33A by 1 mm or more, so that resistance part 7 may suppress the passage of the exhaust gas in the opposite direction.

As shown in FIGS. 3 and 4, cutouts 52 radially extended from through-hole 51 are provided in backflow-restricting layer 5. This configuration allows the exhaust gas passing in the discharge direction to be smoothly discharge from battery cell 1 in which thermal runaway has occurred by suppressing the flow of the exhaust gas in the opposite direction. Backflow-restricting layer 5 has an advantage allowing the exhaust gas to be more smoothly discharged by deforming an inner peripheral portion of through-hole 51 as shown in FIG. 7 (through-hole 51 at a left end in the drawing) by the high-temperature exhaust gas vigorously ejected from battery cell 1 in which thermal runaway has occurred.

As indicated by a broken line in FIG. 8, backflow-restricting layer 5 with cutouts 52 at through-hole 51 constitutes resistance part 7 that suppresses the passage of the exhaust gas in the opposite direction by deforming the inner peripheral portion of through-hole 51 toward end-surface electrode 1a of battery cell 1 due to the exhaust gas flowing in the opposite direction in through-hole 51 to close or narrow gas permeation gap 33 of lead plate 3. In this structure, the inner peripheral portion of through-hole 51 deformed toward end-surface electrode 1a due to the pressure of the exhaust gas passing through through-hole 51 in the opposite direction closes or narrows gas permeation gap 33 of lead plate 3. This configuration prevents the exhaust gas flowing in the opposite direction from flowing in from gas permeation gap 33 to prevent the catching fire of another battery cell 1.

As described above, backflow-restricting layer 5 having cutouts 52 connected to through-hole 51 allows the exhaust gas passing through gas permeation gap 33 to smoothly pass in the discharge direction, and suppresses or prevents the exhaust gas passing in the direction opposite to the discharge direction. This configuration prevents the catching fire of another battery cell 1. The backflow-restricting layer may not necessarily have the radial cutout therein around the through-hole. For example, even the through-hole without the cutout still allows the inner peripheral portion of the through-hole to deform to be bent toward the end-surface electrode of the battery cell due to the exhaust gas passing through the through-hole in the opposite direction, and closes or narrows the gas permeation gap. The through-hole is not necessarily required, and only the radially-extended cutout may be provided without the through-hole. Even in this case, the cutout extended radially is deformed due to the high-temperature exhaust gas ejected from the battery cell to discharge the exhaust gas, thereby suppressing the passage of the exhaust gas flowing in the opposite direction reliably.

Backflow-restricting layer 5 is made of a rubber material having a predetermined thickness, and can more smoothly pass the exhaust gas ejected in the discharge direction from battery cell 1 in which thermal runaway has occurred. This is because a part of backflow-restricting layer 5 made of the rubber material is burned out or melted by the ejected high-temperature exhaust gas, and the exhaust gas can smoothly pass through by enlarging through-hole 51. Backflow-restricting layer 5 having the cutout at through-hole 51 and made of the rubber material has an advantage that the deformation due to the high-temperature exhaust gas is increased and the exhaust gas can further smoothly pass in the discharge direction.

Backflow-restricting layer 5 made of the rubber material is melted by the high-temperature exhaust gas flowing in the opposite direction through through-hole 51, and thus, a melted piece or a melted waste of the material closes or narrows gas permeation gap 33 of lead plate 3. This configuration constitutes resistance part 7 that suppresses the passage of the exhaust gas in the opposite direction. As described above, backflow-restricting layer 5 melted by the high-temperature exhaust gas is burned out or melted by the exhaust gas passing through gas permeation gap 33, and thus, the exhaust gas can efficiently pass in the discharge direction. The backflow-restricting layer is melted by the exhaust gas passing in the direction opposite to the discharge direction, and gas permeation gap 33 is closed or narrowed by the melted piece and the melted waste. Accordingly, the exhaust gas is prevented from flowing in from gas permeation gap 33, and thus, the catching fire of another battery cell 1 can be prevented.

Backflow-restricting layer 5 made of foamed material has a small heat capacity with respect to its volume, and is easily overheated accordingly by the exhaust gas and burned out, enlarging through-hole 51. Thus, the backflow-restricting layer has an advantage that the exhaust gas can be smoothly discharged in the discharge direction. As backflow-restricting layer 5 made of the rubber material, for example, a rubber material of foamed chloroprene can be used. However, as backflow-restricting layer 5 made of the rubber material, a rubber material other than chloroprene, for example, silicone rubber foam or the like can also be used.

Backflow-restricting layer 5 is preferably bonded to the surface of lead plate 3 via a bonding layer, such as an adhesive, a pressure-sensitive adhesive, or a double-sided tape. Battery pack 100 in which backflow-restricting layer 5 is bonded to and securely contacting the surface of lead plate 3 without any gap has an advantage that the exhaust gas does not leak and flow through the gap between lead plate 3 and backflow-restricting layer 5 and battery cell 1 in which thermal runaway has occurred can be reliably prevented from inducing the thermal runaway of adjacent battery cell 1. Backflow-restricting layer 5 closely contacting the surfaces of lead plates 3 via the bonding layers preferably has a non-bonding region that is not bonded to lead plate 3 having a potential difference from another lead plate in order to maintain a large insulation resistance between lead plates 3 having a potential difference. This is because when lead plate 3 having a potential difference is coupled by backflow-restricting layer 5 via the bonding layer, the insulation resistance decreases due to moisture absorbed by backflow-restricting layer 5. In particular, since backflow-restricting layer 5 having fine voids like a foam absorbs moisture and the electric resistance tends to decrease, it is particularly effective to provide the non-bonding region at a boundary of lead plate 3 having a potential difference to increase the insulation resistance.

### INDUSTRIAL APPLICABILITY

A battery pack according to the present invention is suitably useable as a rechargeable battery pack for devices, such as an assist bicycle, an electric motorcycle, an electric wheelchair, an electric cart, a cleaner, and an electric tool, driven by a battery.

### REFERENCE MARKS IN THE DRAWINGS

100: battery pack
1: battery cell
1a, 1b: end-surface electrode
2: battery holder
2A, 2B: holder unit
3: lead plate
3A: non-welding surface
3B: welding surface
4: outer case
5: backflow-restricting layer
6: circuit board
7: resistance part
10: battery assembly
21: surface plate
22: holding part
23: battery housing
24: electrode window
25: recess
26: positioning recess
27: insulating rib
28: housing space
29: connection window
30: plate-shaped part
31: electrode connecting tongue
32: coupling part
33: gas permeation gap
33A: slit opening
35: connection part
51: through-hole
52: cutout
101: cylindrical battery
102: tubular body
103: thermal conduction plate

## Claims

1. A battery pack comprising:
a battery assembly including
a plurality of battery cells arranged parallel to one another, each of the plurality of battery cells including a discharge valve and an end-surface electrode, the discharge valve being provided on an end surface of the each of the plurality of battery cells, the end-surface electrode being provided at an end portion of the each of the plurality of battery cells and being arranged on a same plane, and
a lead plate having a welding surface connected to the end-surface electrode of the each of the plurality of battery cells arranged on the same plane;
an outer case housing the battery assembly therein; and
a backflow-restricting layer disposed in the outer case, the backflow-restricting layer being disposed on a non-welding surface of the lead plate, wherein
the lead plate has a gas permeation gap therein allowing an exhaust gas discharged from the discharge valve to pass through the gas permeation gap in a discharge direction of the backflow-restricting layer from the each of the plurality of battery cells, and
the backflow-restricting layer includes a resistance part configured to:
allow the exhaust gas passing through the gas permeation gap to pass in the discharge direction; and
suppress or prevent the exhaust gas from passing in a direction opposite to the discharge direction.

2. The battery pack according to claim 1, wherein
the battery assembly further includes a battery holder allowing the plurality of battery cells to be arranged in fixed positions,
the battery holder includes a surface plate allowing the lead plate to be disposed at a fixed position,
the surface plate has an electrode window therein that exposes, through the electrode window, the end-surface electrode of the each of the plurality of battery cells disposed in the fixed positions, and
the lead plate is connected to the end-surface electrode of the each of the plurality of battery cells in the electrode window.

3. The battery pack according to claim 2, wherein the lead plate disposed at the fixed position of the surface plate has a plurality of gas permeation gaps therein each of the plurality of gas permeation gaps being the gas permeation gap.

4. The battery pack according to any one of claims 1 to 3, wherein
the backflow-restricting layer has a through-hole configured to the exhaust gas to pass through the through-hole, and
the backflow-restricting layer includes a resistance part around near the through-hole, the resistance part closing a position facing the gas permeation gap.

5. The battery pack according to claim 4, wherein
the gas permeation gap of the lead plate is a slit opening having an annular shape, and
the through-hole of the backflow-restricting layer opens and faces an inside of the slit to constitute the resistance part.

6. The battery pack according to claim 4 or 5, wherein the backflow-restricting layer has a cutout therein extended radially from the through-hole.

7. The battery pack according to any one of claims 1 to 3, wherein
the backflow-restricting layer has a cutout therein extended radially, the cutout allowing the exhaust gas to pass through the cutout, and
the cutout has a resistance part closing a position facing the gas permeation gap.

8. The battery pack according to any one of claims 1 to 7, wherein the backflow-restricting layer is made of rubber material.

9. The battery pack according to any one of claims 1 to 8, wherein the backflow-restricting layer is made of foamed material.

10. The battery pack according to any one of claims 1 to 9, wherein
the each of the plurality of battery cells includes a protrusion electrode provided on an end surface thereof, and
the discharge valve has an exhaust port opening at an outer periphery of the protrusion electrode.

11. The battery pack according to claim 10, wherein the each of the plurality of battery cells is a cylindrical battery.

12. The battery pack according to any one of claims 1 to 11, wherein
the lead plate includes:
a plate part having a flat shape and constituting the non-welding surface; and
an electrode connecting tongue connected to the end-surface electrode of the each of the plurality of battery cells, the electrode connecting tongue constituting the welding surface, and
the lead plate having a slit opening provided therein along an outer periphery of the electrode connecting tongue, the slit opening constituting the gas permeation gap.

13. The battery pack according to any one of claims 1 to 12, wherein the backflow-restricting layer is bonded to a surface of the lead plate.
